Europäisches Patentamt

European Patent Office

Office européen des brevets

(11) Veröffentlichungsnummer: **0 263 560 B1**

(19)

(12) **EUROPÄISCHE PATENTSCHRIFT**

(45) Veröffentlichungstag der Patentschrift: **22.04.92**

(51) Int. Cl.⁵: **G02B 6/28**

(21) Anmeldenummer: **87201892.4**

(22) Anmeldetag: **05.10.87**

(54) Optischer Sternkoppler.

(30) Priorität: **07.10.86 DE 3634064**

(43) Veröffentlichungstag der Anmeldung:
**13.04.88 Patentblatt 88/15**

(45) Bekanntmachung des Hinweises auf die
Patenterteilung:
**22.04.92 Patentblatt 92/17**

(84) Benannte Vertragsstaaten:
**DE FR GB**

(56) Entgegenhaltungen:
**DE-A- 2 717 535**
**DE-A- 3 230 657**
**US-A- 4 515 428**

**APPLIED PHYSICS LETTERS, Band 40, Nr. 7,
1. April 1982, Seiten 549-550; T. FINDAKLY et
al.: "Single-mode integrated optical 1xN star
coupler"**

**OPTICS LETTERS, Band 9, Nr. 6, Juni 1984,
Seiten 246-248; R.A. BECKER et al.: "Low-loss
multiple-branching circuits in Ti-indiffused
LiNbO3 channel waveguides"**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB**

(72) Erfinder: **Mannschke, Lothar, Dipl.-Ing.
Haidbuckel 23
W-8501 Eckental-Eckenhaid(DE)**

(74) Vertreter: **Peuckert, Hermann, Dipl.-Ing. et al
Philips Patentverwaltung GmbH Wendenstrasse 35 Postfach 10 51 49
W-2000 Hamburg 1(DE)**

**Beschreibung**

Die Erfindung betrifft einen optischen Sternkoppler aus kaskadierten integrierten 1x3-Kopplern, wobei ein integrierter 1x3-Koppler durch symmetrische spitzwinklige Einmündung zweier Seitenbahnen an derselben Stelle einer Zentralbahn gebildet und eine Einmündungszone (Taperbereich) vorhanden ist, die zwischen den Schnittpunkten der parallelen Begrenzungslinien einer Seitenbahn mit der Zentralbahn liegt.

Für optische Kommunikation werden optische Bauteile benötigt, die die Leistung irgendeines von n ankommenden Kanälen auf n abgehende Kanäle verteilen. Für n größer als 2 nennt man diese Bauteile Sternkoppler. Diese Koppler sollen möglichst geringe Einfügeverluste haben und die Leistung möglichst gleichmäßig auf die n abgehenden Kanäle verteilen, unabhängig von der Art der Anregung.

Aus der DE-OS 30 36 044 ist ein optischer Sternkoppler bekannt, bei dem zwei Bündel von Lichtleitfasern über ein aus einem planaren Wellenleiter bestehendes Mischerelement miteinander verbunden sind. Die Dicke des Mischerelementes ist annähernd gleich dem Faserdurchmesser. Die an seinem Ein- bzw. Ausgang ankommenden und abgehenden Lichtleitfasern liegen in derselben Ebene und sind derart angekoppelt, daß ihre Pakkungsdichte möglichst hoch ist. Der Durchmesser der Lichtleitfasern ist annähernd gleich dem Kerndurchmesser der mit dem Sternkoppler zu verbindenden Systemfasern. Das Mischerelement wirkt zusammen mit den an ihm angekoppelten ankommenden Lichtleitfasern wie ein optischer Multiplexer oder optischer Koppler, während das Mischerelement in Verbindung mit den abgehenden Lichtleitfasern wie eine optische Verzweigungseinrichtung wirkt.

Eine optische Verzweigungseinrichtung ist aus der DE-OS 23 40 020 bekannt. Diese Verzweigungseinrichtung ist als Dreitor ausgebildet, sie kann sowohl für Multimode- wie wie auch für Singlemodefasern in planarer Technik hergestellt werden.

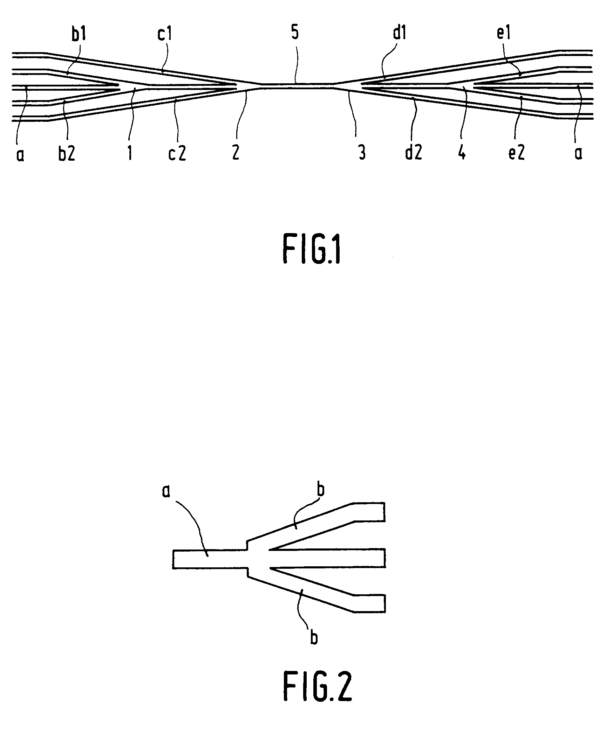

Integrierte einmodige optische 1×N-Sternkoppler sind in Appl. Phys. Lett. 40 (7) vom 01. April 1982 auf Seiten 549 bis 550 ausführlich beschrieben. Eine der in Fig.1 auf Seite 549 dargestellten Konfigurationen ist aus kaskadierten Dreitoren aufgebaut. Es ist eine lichtleitende Zentralbahn vorgesehen, an der die Dreitore hintereinander angeordnet sind. Bei jedem Dreitor ist von jeder Seite je eine Zweigbahn unter dem gleichen Winkel zur Zentralbahn geneigt. Bei dem gezeigten Ausführungsbeispiel sind die Zweigbahnen nicht mit der Zentralbahn verbunden, vielmehr besteht zwischen ihnen ein definierter Abstand. Es sind die Einflüsse der Größe dieses Abstandes sowie der Winkel, unter denen die Zweigbahnen in die Zentralbahn münden, angegeben. Die Anordnung erfordert wegen der kleinen Einmündungswinkel eine große Baulänge.

Die DE-OS 32 30 657 beschreibt einen optischen Multiplexer aus kaskadierten Dreitoren, der auch als Verzweigungseinrichtung benutzt werden kann. Es ist eine lichtleitende Zentralbahn vorgesehen, an der die Dreitore hintereinander angeordnet sind und bei jedem Dreitor von jeder Seite je eine Zweigbahn unter dem gleichen Winkel in die Zentralbahn mündet. Ein Mündungswinkel von ca. 1,5° ist als besonders vorteilhaft angegeben. Die Einfügeverluste an den Dreitoren sind gering und jeweils gleich. Die lichtleitenden Bahnen werden in einem Festkörper aus z.B. Boroxidsilikatglas dadurch hergestellt, daß mit einer Maske entlang gewünschter Bahnen Metallionen eingebracht werden, die den Brechungsindex verändern. Ein anderes Herstellungsverfahren hierfür ist beispielsweise in dem Bericht der "First European Conference on Integrated Optics" London, 14./15. September 1981, z.B. D. Hoffmann und U. Langmann, Seiten 1-3 angegeben. Als Festkörper ist ein Substrat aus $LiNbO_3$ verwendet, die Bahnen sind durch eindiffundierte Titanionen erzeugt.

Im Aufsatz "Low-loss multiple-branching circuit Ti-indiffused $LiNbO_3$ channel waveguides" in Optics Letters, Vol. 9 No. 6 von Juni 1984, Seiten 246 bis 248 sind die Eigenschaften eines in integrierter Technik hergestellten 1x3-Koppler untersucht. Es ist die Analyse der Mündungswinkelabhängigkeit der Leistungsverteilung zwischen Mittelzweig zur Summe der Außenzweige angegeben, die untersuchten Mündungswinkel liegen zwischen 0,2° und 2,5°.

Der Erfindung liegt die Aufgabe zugrunde, einen optischen Sternkoppler der eingangs genannten Art anzugeben, der kompakt aufbaubar ist und insbesondere eine kurze Baulänge aufweist und bei dem die Dämpfung bzw. Überkopplung gezielt einstellbar ist.

Diese Aufgabe wird gemäß der Erfindung dadurch gelöst, daß die Mündungswinkel zwischen den Seitenbahnen und der Zentralbahn größer/gleich 2,5° sind und die Einmündungszone verkürzt ist, indem sie durch eine zur Zentralbahn in etwa senkrechte Linie begrenzt wird und sich diese Linie zwischen den zwei Schnittpunkten der Begrenzungslinien der Seitenbahnen und der Zentralbahn befindet.

Vorteilhafte Ausgestaltungen sind in den Unteransprüchen angegeben.

Anhand eines in den Figuren 1 und 2 dargestellten Ausführungsbeispiels soll die Erfindung im folgenden näher beschrieben und erläutert werden. Dabei ist im folgenden ein integrierter 1x3-Koppler als Dreitor bezeichnet.

Die Figur 1 zeigt einen aus kaskadierten Dreitoren (integrierter 1x3-Koppler) aufgebauten Sternkoppler. Dieser Sternkoppler weist eine durchgehende Zentralbahn a auf, die der durchgehenden Zentralbahn des in der DE-OS 32 30 657 angegebenen optischen Multiplexers entspricht. In diese Zentralbahn münden an einem ersten Dreitor 1 zwei weitere Bahnen b1 und b2, an einem zweiten Dreitor 2 die weiteren Bahnen c1 und c2. Beim Dreitor 3 zweigen zwei Leiterbahnen d1 und d2 und beim folgenden Dreitor 4 zwei weitere Leiterbahnen e1 und e2 ab. Durch das Zusammenführen der lichtleitenden Bahnen entsteht bei jedem Dreitor ein Taperbereich. Jeder Abschnitt der Zentralbahn zwischen den einzelnen Dreitoren bildet jeweils eine Mischerzone. Von Dreitor zu Dreitor haben die einzelnen Abschnitte der Zentralbahn a eine konstante Breite, die im Abschnitt 5 zwischen den Dreitoren 2 und 3 größer ist als in den angrenzenden Abschnitten zwischen den Dreitoren 1 und 2 sowie den Dreitoren 3 und 4 und in diesen Abschnitten untereinander gleich, aber größer als in den außenliegenden Abschnitten. Die Breite der Abschnitte der Zentralbahn ist so bemessen, daß sich jeweils i Moden ausbilden können, wobei i eine ungerade Zahl ist. Im Bereich 5 zwischen den Dreitoren 2 und 3 können sich fünf Moden ausbilden. Dieser Bereich ist so lang bemessen, daß eine gewünschte Durchmischung der Moden erfolgt, so daß an der Auskoppelseite eine bestimmte Verteilung der Energie vorliegt, z.B. derart, daß an der Auskoppelseite die Ausgangsleistung gleich ist. Die Länge der übrigen Abschnitte richtet sich nach den Abmessungen der Lichtwellenleiter, die außen angekoppelt werden, sowie nach den Winkeln zwischen den Bahnen. Die außen angekoppelten Lichtwellenleiter sind zweckmäßig dicht nebeneinander angeordnet, so daß sich ihre Mantelaußenseiten berühren.

Die Leiterbahnen b1 bis e2 sind abhängig von der Wellenlänge und dem sogenannten Confinementfaktor C vorzugsweise einmodig ausgeführt oder mit Modenvolumen V kleiner/gleich vier geringfügig mehrmodig, ebenso die Leiterbahn a von der Eingangsseite bis zu dem ersten Dreitor 1 und vom Dreitor 4 bis zum Ausgang. Das Modenvolumen V ist das Produkt aus der Wellenkonstanten der Leiterbahn, der Breite der Leiterbahn und der numerischen Apertur.

Der Confinement-Faktor gibt an, wieviel Energie des Gesamtfeldes im Kern des Lichtwellenleiters bzw. in der Leiterbahn übertragen wird. In einer bevorzugten Ausführungsform ist der Confinement-Faktor für den Grundmodus größer als 0,9 für alle einmodig oder nahezu einmodig bemessenen Bahnen. Dies trägt in erheblichen Maße dazu bei, daß der Sternkoppler besonders dämpfungsarm ist. Der Sternkoppler ist problemlos in bekannter Weise zum Beispiel nach einem der bereits eingangs erwähnten bekannten Verfahren herstellbar.

Die abgezweigte bzw. eingekoppelte Leistung hängt von der Gestaltung der Dreitore ab, die anhand der Fig. 2 beschrieben ist. In Figur 2 ist in vergrößertem Maßstab ein Dreitor im Detail gezeigt. Dieses ist in dieser Ausgestaltung für einmodig oder nahezu einmodiger Einmündungen mit kleinem Winkel besonders geeignet. Die der Zentralbahn a benachbarten ("inneren") Begrenzungslinien der spitzwinklig in die Zentralbahn einmündenden Bahnen b verlaufen geradlinig, der Winkel zwischen ihnen und den Begrenzungslinien der Zentralbahn a ist gleich dem Mündungswinkel. Die äußeren Begrenzungslinien der einmündenden Bahnen b verlaufen im Konvergenzbereich nur bis an die Einmündungsstelle etwa parallel zu den inneren Begrenzungslinien. Im Bereich der Einmündungsstelle treffen sie etwa rechtwinklig auf die Zentralbahn, so daß die Länge der Einmündungsstelle und somit der Taperbereich verkürzt ist. Durch die Wahl der Länge der Einmündung ist der Grad der Überkopplung bestimmbar und zwar unabhängig vom Mündungswinkel, so daß bei unverändert kompakter Bauform die Überkopplungen unterschiedlich gewählt werden können.

## Patentansprüche

1.  Optischer Sternkoppler aus kaskadierten integrierten 1x3-Kopplern, wobei ein integrierter 1x3-Koppler durch symmetrische spitzwinklige Einmündung zweier Seitenbahnen an derselben Stelle einer Zentralbahn gebildet und eine Einmündungszone vorhanden ist, die zwischen den Schnittpunkten der parallelen Begrenzungslinien einer Seitenbahn mit der Zentralbahn liegt, dadurch gekennzeichnet, daß die Mündungswinkel zwischen den Seitenbahnen und der Zentralbahn größer/gleich 2,5° sind und die Einmündungszone verkürzt ist, indem sie durch eine zur Zentralbahn in etwa senkrechte Linie begrenzt wird und sich diese Linie zwischen den zwei Schnittpunkten der Begrenzungslinien der Seitenbahnen und der Zentralbahn befindet.

2.  Optischer Sternkoppler nach Anspruch 1, dadurch gekennzeichnet, daß der Confinement-Faktor für den Grundmodus für alle einmodig oder nahezu einmodig bemessenen Leiterbahnen größer 0,9 gewählt ist.

3.  Optischer Sternkoppler nach Anspruch 1 oder 2, dadurch gekennzeichnet, daß die Abschnitte der Zentralbahn zwischen den integrierten 1x3-Kopplern jeweils konstante Breite aufweisen und daß die Breite der Abschnitte von der Einkoppel- bzw. Auskoppelseite bis zur Mitte des Sternkopplers hin zunimmt.

## Claims

1. An optical star coupler comprising cascaded integrated 1x3 couplers, an integrated 1x3 coupler being formed by the symmetrical convergence of two side branches in the same point of a center channel at an acute angle, and a convergence zone being situated between the intersections of the parallel bounding lines of a side branch and the center channel, characterized in that the angles at which the side branches and the center channel converge are greater than or equal to 2.5° and the convergence zone is reduced by a bounding line which extends substantially perpendicularly to the center channel and which line is situated between the two points of intersection of the bounding lines of the side branches and the center channel.

2. An optical star coupler as claimed in Claim 1, characterized in that the confinement factor for the fundamental mode is chosen to exceed 0.9 for all singlemode or substantially single-mode conductor lines.

3. An optical star coupler as claimed in Claim 1 or 2, characterized in that the sections of the center channel between the integrated 1x3 couplers are always of a constant width and that the width of the sections increases from the coupling-in or coupling-out side to the center.

## Revendications

1. Coupleur optique en étoile constitué de coupleurs 1x3 intégrés cascadés, un coupleur 1x3 intégré étant formé par deux voies latérales qui débouchent symétriquement et à angle aigu, au même endroit, dans une voie centrale, coupleur optique présentant une zone d'embouchure située aux points d'intersection formés par les lignes de limitation parallèles d'une voie latérale avec la voie centrale, caractérisé en ce que l'angle d'embranchement formé par les voies latérales et la voie centrale est supérieur/égal à 2,5° et en ce que la zone d'embouchure est diminuée en longueur du fait qu'elle est limitée par une ligne presque perpendiculaire à la voie centrale et que cette ligne est située entre les deux points d'intersection des lignes de limitation des voies latérales et de la voie centrale.

2. Coupleur optique en étoile selon la revendication 1, caractérisé en ce que le facteur de confinement pour le mode fondamental est choisi supérieur à 0,9 pour toutes les voies de guidage de lumière conçues pour un positionnement monomode ou presque monomode.

3. Coupleur optique en étoile selon la revendication 1 ou 2, caractérisé en ce que les segments de la voie centrale situés entre les coupleurs 1x3 intégrés présentent chacun une largeur constante et en ce que la largeur des segments, comptée à partir des côtés d'entrée ou de sortie, va en augmentant jusqu'au centre du coupleur en étoile.

FIG.1

FIG.2